# EUROPEAN PATENT APPLICATION

(11) **EP 4 843 649 A1**
(43) Date of publication of application: **25.11.2026**
(21) Application number: 26169230.5
(22) Date of filing: 30.03.2026
(51) Int. Cl.: B01D 29/64, B01D 29/23, B01D 29/35

(54) **SELF CLEANING FUEL STRAINER**

(30) Priority: 20.05.2025 US 202519213138
(71) Applicant: The Boeing Company, Arlington, VA 22202 (US)
(72) Inventor: BRAY, Keegan David, Arlington, 22202 (US); DOTIVALA, Arzan Cyrus, Arlington, 22202 (US); ARTHUR, Shane Edward, Arlington, 22202 (US); OLBERG, Jeffrey Hayden, Arlington, 22202 (US)
(74) Representative: Boult Wade Tennant LLP

(57) **Abstract**

A fuel strainer configured to remove debris from the fuel. The fuel strainer includes a housing that extends around an interior space. A straining element filters the fuel as it passes through the interior space. A scraper element contacts against and moves along the straining element to remove the accumulated debris. The fuel strainer is an active device that enables the accumulated debris to be removed from the straining element.

## Description

### TECHNOLOGICAL FIELD

The present disclosure relates generally to the field of fuel strainers, and more specifically, to fuel strainers that actively clear accumulated debris that has been removed from the fuel to enable additional useful life for the fuel strainers.

### BACKGROUND

A fuel strainer is a component of a fuel system. The fuel strainer is configured to remove debris including contaminants and impurities from fuel before it reaches the engine. Examples of debris include but is not limited to dirt, ice, rust, and paint chips. Fuel strainers are positioned at various locations within the fuel system, and often are mounted to a fuel line that extends between a fuel tank and an engine.

Existing fuel strainers are passive devices that filter the fuel as it moves within the fuel system. The fuel strainers remove the debris from the fuel which accumulates within a straining element within the fuel strainer. The accumulated debris reduces the effectiveness of the fuel strainers thus requiring regular replacement.

Existing fuel strainers are not designed for use within certain contexts. One design issue is the relatively high weight of existing fuel strainers. The weight of the fuel strainer can be an issue in certain contexts, such as for use within an aircraft in which the efficiency of the aircraft is tied to the overall weight. Another design issue with existing fuel strainers is the relatively large size. This can also be an issue in contexts having limited space to accommodate the fuel strainer. Again, one application is for use with an aircraft in which space may be limited. In some examples, the fuel strainer on an aircraft is positioned within the interior of a wing and space is limited.

### SUMMARY

There is described herein a fuel strainer that removes debris from fuel within a fuel system. The fuel strainer comprises a housing that extends around an interior space with the housing comprising an inlet to receive the fuel into the interior space and an outlet through which the fuel exits from the interior space. A straining element is positioned within the interior space and through which the fuel passes when moving between the inlet and the outlet with the straining element comprising a body configured to allow the fuel to pass and to remove the debris from the fuel. A scraper element is positioned within the interior space and configured to move relative to the straining element and to contact against and remove the debris that has accumulated on the body.

In some examples, the housing and the straining element comprise a common or substantially common shape.

In some examples, the straining element comprises a frame that is mounted to and supports the body and the body comprises openings through which the fuel passes.

In some examples, a first sensor is positioned at the inlet and configured to detect a pressure of the fuel at the inlet, and a second sensor is positioned at the outlet and configured to detect the pressure of the fuel at the outlet.

In some examples, a shaft extends within the interior space in proximity to the straining element and with the shaft operatively connected to the scraper element and a motor is connected to the shaft with the motor configured to rotate the shaft to move the scraper element along the straining element.

In some examples, the scraper element comprises a plurality of layers that are in a stacked arrangement and wherein a limited number of the layers are configured to contact against the straining element and a remainder of the layers are positioned away from the straining element.

In some examples, a computing device comprising processing circuitry is configured to detect a difference between a pressure of the fuel at the inlet and the outlet and to move the scraper element relative to the straining element to remove the debris from the straining element when the difference in the pressure is above a predetermined amount.

In some examples, the fuel strainer is mounted within an aircraft.

In some examples, the fuel strainer is mounted within a wing of the aircraft.

In some examples, a reservoir is positioned within the interior space adjacent to the straining element with the reservoir configured to receive the debris that has been removed from the straining element and a cap is connected to the housing and positioned at the reservoir, wherein the cap is configured to be removed from the housing to enable the debris to be removed from the reservoir.

There is described herein a fuel strainer that removes debris from fuel within a fuel system. The fuel strainer comprises a housing with an interior space having an inlet and an outlet. A straining element is positioned within the interior space with the straining element comprising a body with openings that are sized to enable the fuel to pass and to remove the debris from the fuel. A scraper element is positioned within the interior space. A motor is configured to move the scraper element along the straining element to remove the debris from the straining element.

In some examples, a support is positioned within the interior space and connected to the scraper element with the motor configured to rotate the support to move the scraper element along the straining element.

In some examples, sensors are configured to detect a pressure of the fuel at the inlet and the outlet, a computing device receives signals from the sensors and that controls the motor, and the computing device comprises processing circuitry configured to activate the motor to move the scraper element along the straining element with a difference in the pressure at the inlet and the outlet exceeds a predetermined threshold.

In some examples, the scraper element comprises a plurality of members that are positioned together in a stacked arrangement.

In some examples, the fuel strainer is mounted within an aircraft and configured to filter the fuel that is delivered to an engine that propels the aircraft during flight.

There is described herein a method of removing debris from a straining element that is configured to be positioned in a fuel system. The method comprises: moving the fuel through the straining element and removing debris from the fuel; and periodically moving a scraper element along the straining element and removing the debris from the straining element.

In some examples, the method further comprises: detecting a difference in a pressure of the fuel between an inlet and an outlet; and moving the scraper element along the straining element and removing the debris from the straining element when the difference exceeds a threshold.

In some examples, the method further comprises maintaining a housing that extends around the straining element connected to a fuel line while removing the debris from the straining element.

In some examples, the method further comprises: collecting the debris within an interior space of a housing that extends around the straining element; removing a cap that extends across an opening in the housing; and removing the debris from the interior space through the opening.

In some examples, the straining element is mounted in a fuel system of an aircraft and the method further comprises moving the scraper element along the straining element and removing the debris from the straining element during flight of the aircraft.

The features, functions and advantages that have been discussed can be achieved independently in various examples or may be combined in yet other examples, further details of which can be seen with reference to the following description and the drawings.

### BRIEF DESCRIPTION OF THE DRAWINGS

Figure 1 is an isometric view of an aircraft that includes one or more fuel strainers within a fuel system.
Figure 2 is a schematic diagram of a fuel strainer.
Figure 3 is an isometric view of a fuel strainer.
Figure 4 is a schematic section view of the fuel strainer of Figure 3.
Figure 5 is a side view of a scraper element.
Figure 6 is an exploded isometric view of the scraper element of Figure 5.
Figure 7 is a schematic diagram of a computing device configured to operate a fuel strainer and configured to communicate with one or more components.
Figure 8 is a flowchart diagram of a method of operating a fuel strainer.
Figure 9 is a flowchart diagram of a method of operating a fuel strainer.
Figure 10 is a schematic diagram of a computing device.

### DETAILED DESCRIPTION

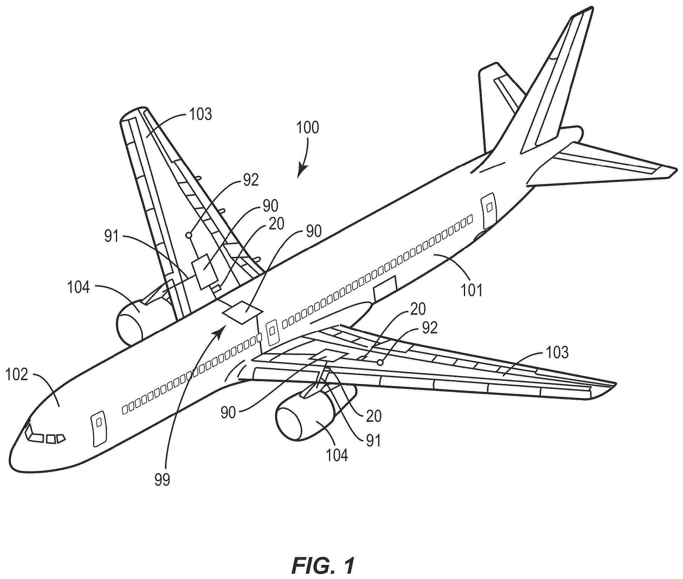

Figure 1 illustrates an aircraft 100 configured to transport passengers and/or cargo. The aircraft 100 generally includes a fuselage 101 with an interior space configured to accommodate passengers and/or cargo. Engines 104 are mounted on the wings 103 on opposing sides of the fuselage 101. A flight deck 102 is positioned at the forward end and includes various controls to enable flight personnel to control the aircraft 100.

A fuel system 99 supplies fuel to the engines 104. The fuel system 99 includes one or more fuel tanks 90 that store the fuel that is used by the engines 104. The fuel tanks 90 can be mounted at various positions within the aircraft 100 including but not limited to within the fuselage 101 and wings 103. Figure 1 includes an example with fuel tanks 90 that are aligned with the wings 103 and include a center fuel tank 90 positioned at the fuselage 101 and wing fuel tanks 90 positioned in the wings 103. Fuel lines 91 extend between the fuel tanks 90 and the engines 104. In some examples, fuel lines 91 also extend between one or more ports 92 on the exterior of the aircraft 100 and the fuel tanks 90. These fuel lines 91 provide for supplying fuel into the fuel tanks 90, such as from a supply vehicle when the aircraft 100 is on the ground.

Figure 1 includes an example of an aircraft 100 having multiple engines 104 and fuel tanks 90. The number and configuration of the engines 104 and fuel tanks 90 can vary with different examples including one or more fuel tanks 90 and one or more engines 104.

One or more fuel strainers 20 are positioned within the fuel system 99 to remove debris from the fuel. The fuel strainers 20 can be positioned at different locations within the fuel system 99 including along the fuel lines 91 between the fuel tanks 90 and engines 104, and along the fuel lines 91 between the ports 92 and the fuel tanks 90. In other examples, the fuel strainers 20 are positioned within the fuel tanks 90.

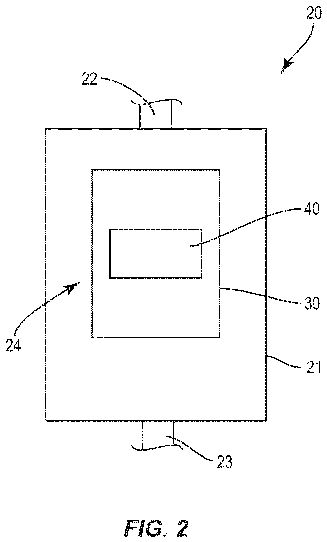

Figure 2 schematically illustrates a fuel strainer 20 configured to remove debris from the fuel. The fuel strainer 20 includes a housing 21 that extends around an interior space 24. The housing includes an inlet 22 to receive the fuel into the interior space 24 and an outlet 23 through which the fuel exits. A straining element 30 filters the fuel as it passes through the interior space 24. The straining element 30 is configured to allow the fuel to pass and to capture the debris within the fuel. A scraper element 40 contacts against and moves along the straining element 30 to remove the accumulated debris. The fuel strainer 20 is an active device that enables the accumulated debris to be removed from the straining element 30 to enable improved operation enabling additional filtering of the fuel. The active configuration provides for an extended life expectancy which is not possible for passive fuel strainers that do not provide for removing the accumulated debris.

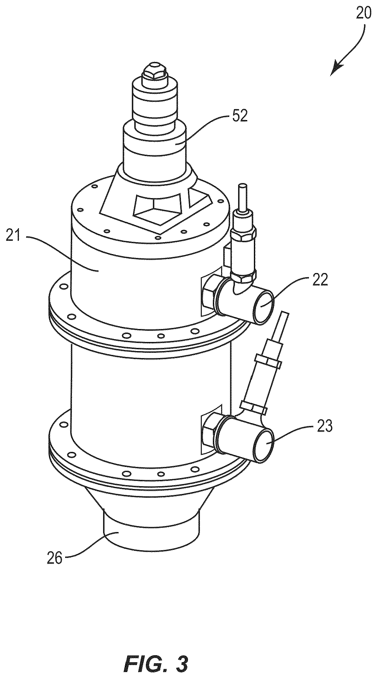

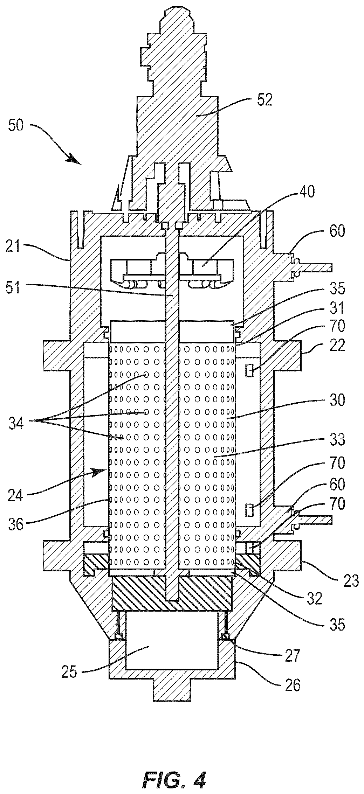

Figures 3 and 4 illustrate a fuel strainer 20 that includes a housing 21 that extends around and encloses an interior space 24. The housing 21 includes an inlet 22 in communication with the interior space 24 and configured to receive the fuel. The fuel exits the interior space 24 through an outlet 23. The housing 21 can have various different shapes and sizes. In the example of Figures 3 and 4 the housing 21 is cylindrical or substantially cylindrical with a relatively tall height and small width. In other examples, the housing 21 has a dish shape with a relatively small height and large width. The housing 21 is shaped to enable the fuel strainer 20 to be positioned as needed within an aircraft 100. In some examples, the housing 21 is sized to be positioned within an interior of a wing 103 of an aircraft 100.

The interior space 24 includes a reservoir 25 configured to collect the debris that has been removed from the straining element 30. In some examples as illustrated in Figure 4, the reservoir 25 is positioned vertically below the straining element 30. This vertical positioning enables gravity to facilitate movement of the debris from the straining element 30 to the reservoir 25. In other examples, the reservoir 25 is positioned at other locations relative to the straining element 30 and relies on movement of the fuel to deliver the debris. In some examples, the housing 21 includes a cap 26 that is positioned at the reservoir 25. The cap 26 is removably connected to a main section of the housing 21 to enable the cap 26 to be disconnected to access the reservoir 25 and remove the debris. The cap 26 can be connected to the main section of the housing 21 in various manners, including but not limited to threads 27 that provide a threaded connection, and to connection by one or more mechanical fasteners.

The straining element 30 is positioned within the interior space 24 and is configured to filter the fuel. The straining element includes a top side 31 and bottom side 32. A body 33 extends between the sides 31, 32. The body 33 is configured to enable the fuel to pass and to prevent the passage of capture the debris. In some examples, the body 33 includes openings 34 sized to enable passage of the fuel but small enough to capture the debris. The body 33 can have various constructions. In some examples, the body 33 is a mesh material constructed from wires that are formed together through various processes such as but not limited to interlacing, weaving, and welding. In other examples, the body 33 is a relatively thin sheet material that includes the openings 34. The size of the openings 34 can vary depending upon the size of the debris that is being removed from the fuel. The openings 34 can have a consistent size throughout or can vary throughout the body 33.

In some examples, the housing 21 includes a frame to support the body 33. The frame includes flanges 35 at the top and bottom sides 31, 32 and one or more intermediate support members 36. In some examples, the body 33 extends completely between the top side 31 and the bottom side 32. In other examples, the body 33 extends a limited portion of this distance.

The straining element 30 can include various shapes and sizes. In some examples, the straining element 30 has a shape that is similar or substantially similar to the housing 21. In some examples as illustrated in Figure 4, the straining element 30 has a cylindrical or substantially cylindrical shape. In other examples, the two shapes are different.

A scraper element 40 is configured to contact against and remove debris that has accumulated on the straining element 30 and particularly debris that has accumulated on the body 33. The scraper element 40 is sized to fit within the interior space 24 and to move along one or more of the surfaces of the straining element 30. In one example, the scraper element 40 has a disk shape substantially disk shape that is sized to fit within the interior of the straining element 30. The scraper element 40 moves relative to the straining element 30 and contacts against and removes the debris from the straining element 30.

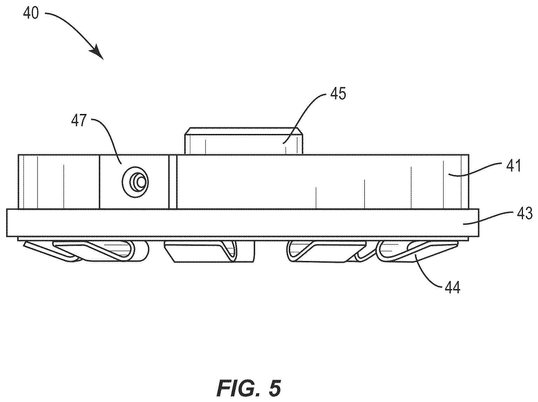

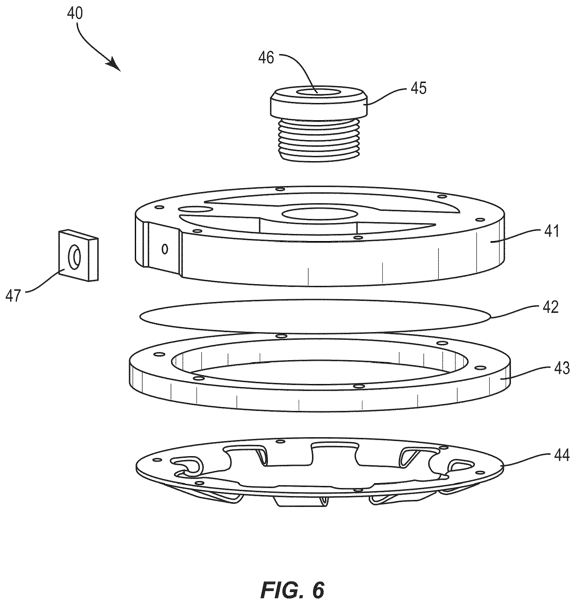

Figures 5 and 6 illustrate a scraper element 40. The scraper element 40 includes a mount plate 41, mesh layer 42, a seal 43, and a crimp plate 44. These components are aligned in an overlapping arrangement. One or more of the components are sized to contact against the straining element 30. A fastener 45, such as a nut, is configured to connect the components together in the stacked configuration. In other examples, the scraper element 40 is constructed as a single member having a unitary construction.

A movement system 50 is configured to move the scraper element 40 relative to the straining element 30. The movement system 50 includes a shaft 51 that extends along the straining element 30. The shaft 51 can extend along the entire length or along a limited portion of the length of the straining element 30. In some examples, including the example of Figure 4, the shaft 51 extends through an interior of the straining element 30. The shaft 51 is threaded to engage with a threaded opening 46 of the fastener 45.

A motor 52 is connected to and configured to rotate the shaft 51 in forward and reverse directions. Rotation of the shaft 51 in a first direction causes the scraper element 40 to move in a first direction relative to the straining element 30. Rotation of the shaft 51 in a second direction moves the scraper element 40 in an opposing second direction along the straining element 30. Back and forth rotations of the shaft 51 enable the scraper element 40 to move up and down along the straining element 30 to remove the debris.

In some examples, the location of the scraper element 40 relative to the straining element 30 is determined by one or more position sensors 60. The position sensors 60 are configured to detect the position of the scraper element 40. In some examples, the sensors 60 detect a magnet 47 that is connected to the scraper element 40. In some examples as illustrated in Figure 4, a pair of sensors 60 detect the position with a first sensor 60 positioned at a top of the housing 21 to sense an upper position and a second sensor 60 positioned at a bottom of the housing 21 to sense a lower position of the scraper element 40.

The position of the scraper element 40 can be determined by other methods. In some examples, the motor 52 is a stepper motor configured to be monitored to track the rotations of the shaft 51 and the corresponding position of the scraper element 40.

One or more sensors 70 are positioned to determine one or more aspects of the fuel within the fuel strainer 20. In some examples, a first sensor 70 is positioned at the inlet 22 and a second sensor 70 is positioned at the outlet 23. The sensors 70 detect a pressure of the fuel at the respective location. In some examples, one or more additional sensors 70 are positioned in the interior space 24 between the inlet 22 and outlet 23 to detect the pressure at these locations. In some examples, one or more sensors 70 detect the flow rate of the fuel.

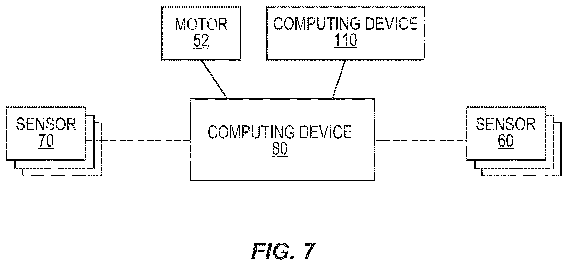

A computing device 80 controls the operation of the fuel strainer 20. As illustrated in Figure 7, computing device 80 receives signals from one or more of the sensors 60, 70. When the debris is to be removed from the straining element 30, the computing device 80 activates the motor 52 and moves the scraper element 40 along the straining element 30. The extent of movement of the scraper element 40 relative to the straining element 30 can vary. In some examples, the movement includes moving from the top side 31 of the straining element 30 to the bottom side 32. In other examples, the movement includes moving from the top side 31 to the bottom side 32, and then returning to the top side 31.

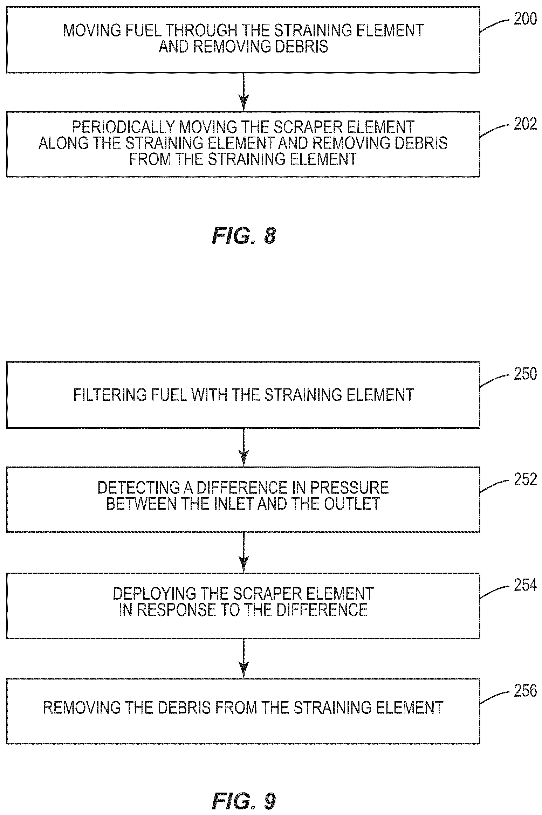

Figure 8 illustrates a method of removing debris within a fuel strainer 20 that is filtering fuel within a fuel system 99. The method includes moving the fuel through the straining element 30 and removing debris from the fuel (block 200). The scraper element 40 is periodically moved along the straining element 30 to remove the debris from the straining element 30 (block 202).

In some examples, the movement of the scraper element 40 occurs by the motor 52 rotating the shaft 51. The threaded connection between the shaft 51 and the scraper element 40 provides for the scraper element 40 to move along the shaft 51 and along the straining element 30 to remove the debris. In some examples, the threaded connection causes the scraper element 40 to rotate around the shaft 51 while moving upward and downward along the shaft 51. In other examples, the scraper element 40 does not rotate.

The scraper element 40 removes the debris at periodic intervals. In some examples, the scraper element 40 is deployed to remove the debris when a difference in fuel pressure above a threshold occurs between the inlet 22 and the outlet 23 of the housing 21. In some specific examples, the threshold is a difference of one psi (6.9 kPa). In other examples, the periodic intervals are based on the amount of fuel that is filtered by the fuel strainer 20. Some specific examples include deploying the scraping element after filtering a predetermined number of gallons of fuel. Other examples include periodic time intervals at which the scraping element 40 is deployed. For example, the scraping element 40 is deployed every hour of operation of the aircraft 100. In yet other examples, the scraping element 40 is deployed upon receiving a signal from another computing device 110, such as a fuel system controller that oversees fuel distribution or an engine controller that oversees operation of the engines 104. The scraper element 40 can be deployed based on a single one of these methods, or on two or more of the methods. For example, the scraper element 40 is deployed upon detection of a difference in the fuel pressure between the inlet 22 and the outlet 23. If the scraper element 40 is not deployed after a predetermined amount of fuel is moved through the fuel strainer 20, then the scraper element 40 is deployed regardless of the difference in fuel pressure.

Figure 9 illustrates another method of operating a fuel strainer 20 that is positioned along a fuel system 99. This method includes filtering fuel with the straining element 30 (block 250). A difference in pressure is detected between the inlet 22 and an outlet 23 (block 252). In response to the difference being above a threshold, the scraper element 40 is deployed (block 254) and moved along the straining element 30 to remove the debris from the straining element 30 (block 256).

The active removal of debris from the straining element 30 occurs without removing the fuel strainer 20 from the fuel system 99. This reduces the amount of maintenance required to operate the fuel strainer 20. In some examples, the fuel strainer 20 operates to remove the debris from the straining element 30 during flight of the aircraft 100.

The debris that is removed from the straining element accumulates in the reservoir 25. The reservoir can be periodically cleaned to remove the debris from the interior space 24 of the housing 21. In some examples, this removal occurs during maintenance work on the aircraft 100. A technician removes the cap 26 from the housing 21 and removes the accumulated debris. Once completed, the cap 26 is replaced on the housing 21 and the fuel strainer 20 is operational to continue to filter the fuel within the fuel system 99.

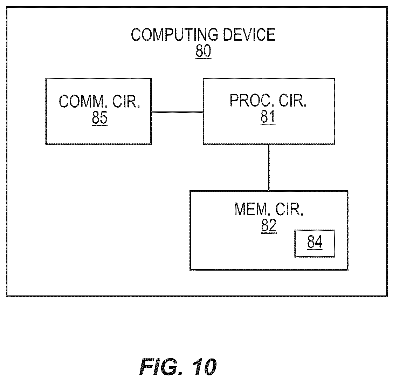

Figure 10 illustrates a computing device 80 that operates the fuel strainer 20. In some examples, the computing device 80 is a stand-alone component. In some examples, the computing device 80 is incorporated into one or more other computing devices. In some examples in which the computing device 80 is on the aircraft 100, the computing device 80 is integrated into one or more other computing devices such as but not limited to a fuel control computing device and a flight control computing device.

The computing device 80 can include one or more of each of a number of components such as, for example, processing circuitry 81 (e.g., processor unit) connected to a memory circuitry 82 (e.g., storage device). The processing circuitry 81 may be composed of one or more processors alone or in combination with one or more memories. The processing circuitry 81 is generally computer hardware that is capable of processing information such as, for example, data, computer programs and/or other suitable electronic information. The processing circuitry 81 is composed of a collection of electronic circuits some of which may be packaged as an integrated circuit or multiple interconnected integrated circuits (an integrated circuit at times more commonly referred to as a "chip"). The processing circuitry 81 may be configured to execute computer programs 84 with programming instructions which may be stored onboard the processing circuitry 81 or otherwise stored in the memory circuitry 82 (of the same or another device).

The processing circuitry 81 may be a number of processors, a multi-core processor or some other type of processor, depending on the particular implementation. Further, the processing circuitry 81 may be implemented using a number of heterogeneous processor systems in which a main processor is present with one or more secondary processors on a single chip. In some examples, the processing circuitry 81 is a symmetric multi-processor system containing multiple processors of the same type. In other examples, the processing circuitry 81 is embodied as or otherwise include one or more ASICs, FPGAs or the like. Thus, although the processing circuitry 81 may be capable of executing a computer program to perform one or more functions, the processing circuitry 81 of various examples may be capable of performing one or more functions without the aid of a computer program. In either instance, the processing circuitry 81 may be appropriately programmed to perform functions or operations according to examples of the present disclosure.

The memory circuitry 82 is generally computer hardware that is capable of storing information such as, for example, data, computer programs (e.g., computer-readable program code) and/or other suitable information either on a temporary basis and/or a permanent basis. The memory circuitry 82 may include volatile and/or non-volatile memory and may be fixed or removable. Examples of suitable memory circuitry 82 include random access memory (RAM), read-only memory (ROM), a hard drive, a flash memory, a thumb drive, a removable computer diskette, an optical disk, a magnetic tape or some combination of the above. Optical disks may include compact disk-read only memory (CD-ROM), compact disk-read/write (CD-R/W), DVD or the like. In various instances, the memory circuitry 82 may be referred to as a computer-readable storage medium. The computer-readable storage medium is a non-transitory device capable of storing information and is distinguishable from computer-readable transmission media such as electronic transitory signals capable of carrying information from one location to another. Computer-readable medium as described herein may generally refer to a computer-readable storage medium or computer-readable transmission medium.

Computing device 80 also includes communications circuitry 83 configured to transmit and/or receive information, such as to and/or from the various data sources (e.g., airport, remote nodes) as well as sensors 60, 70. The communications circuitry 83 may be configured to transmit and/or receive information by physical (wired) and/or wireless communications links. Examples of suitable communication interfaces include a network interface controller (NIC), wireless NIC (WNIC) or the like. The communications circuitry 83 may have one or more transmitters and/or receivers. In some examples, a user interface is included to enable input from the flight personnel and other persons monitoring the aircraft 100. The user interface can include one or more input devices such as but not limited to a keypad, touchpad, roller ball, and joystick. The user interface also includes one or more displays for displaying information regarding the fuel jettison.

Further examples are presented in the clauses below.

Clause 1. A fuel strainer that removes debris from fuel within a fuel system, the fuel strainer comprising:
a housing 21 that extends around an interior space 24, the housing 21 comprising an inlet 22 to receive the fuel into the interior space 24 and an outlet 23 through which the fuel exits from the interior space 24;
a straining element 30 positioned within the interior space 24 and through which the fuel passes when moving between the inlet 22 and the outlet 23, the straining element 30 comprising a body 33 configured to allow the fuel to pass and to remove the debris from the fuel; and
a scraper element 40 positioned within the interior space 24 and configured to move relative to the straining element 30 and to contact against and remove the debris that has accumulated on the body 33.

Clause 2. The fuel strainer of clause 1, wherein the housing 21 and the straining element 30 comprise a common or substantially common shape.

Clause 3. The fuel strainer of clause 1 or 2, wherein the straining element 30 comprises a frame that is mounted to and supports the body 33 and the body 33 comprises openings 34 through which the fuel passes.

Clause 4. The fuel strainer of any of clauses 1 to 3, further comprising a first sensor 70 positioned at the inlet 22 and configured to detect a pressure of the fuel at the inlet 22, and a second sensor 70 positioned at the outlet 23 and configured to detect the pressure of the fuel at the outlet 23.

Clause 5. The fuel strainer of any of clauses1 to 4, further comprising:
a shaft 51 that extends within the interior space 24 in proximity to the straining element 30 and with the shaft 51 operatively connected to the scraper element 40; and
a motor 52 connected to the shaft 51;
wherein the motor 52 is configured to rotate the shaft 51 to move the scraper element 40 along the straining element 30.

Clause 6. The fuel strainer of any of clauses 1 to 5, wherein the scraper element 40 comprises a plurality of layers that are in a stacked arrangement and wherein a limited number of the layers are configured to contact against the straining element 30 and a remainder of the layers are positioned away from the straining element 30.

Clause 7. The fuel strainer of any of clauses 1 to 6, further comprising a computing device 80 comprising processing circuitry 81, the computing device 80 configured to detect a difference between a pressure of the fuel at the inlet 22 and the outlet 23 and to move the scraper element 40 relative to the straining element 30 to remove the debris from the straining element 30 when the difference in the pressure is above a predetermined amount.

Clause 8. The fuel strainer of any of clauses1 to 7, wherein the fuel strainer is mounted within an aircraft 100.

Clause 9. The fuel strainer of clause 8, wherein the fuel strainer is mounted within a wing 103 of the aircraft 100.

Clause 10. The fuel strainer of any of clauses 1 to 9, further comprising:
a reservoir 25 positioned within the interior space 24 adjacent to the straining element 30, the reservoir 25 configured to receive the debris that has been removed from the straining element 30; and
a cap 26 connected to the housing 21 and positioned at the reservoir 25;
wherein the cap 26 is configured to be removed from the housing 21 to enable the debris to be removed from the reservoir 25.

Clause 11. A fuel strainer that removes debris from fuel within a fuel system, the fuel strainer comprising:
a housing 21 that extends around an interior space 24 and comprising an inlet 22 and an outlet 23;
a straining element 30 positioned within the interior space 24, the straining element 30 comprising a body 33 with openings 34 that are sized to enable the fuel to pass and to remove the debris from the fuel;
a scraper element 40 positioned within the interior space 24; and
a motor 52 configured to move the scraper element 40 along the straining element 30 to remove the debris from the straining element 30.

Clause 12. The fuel strainer of clause 11**,** further comprising a support 51 positioned within the interior space 24 and connected to the scraper element 40, with the motor 52 configured to rotate the support 51 to move the scraper element 40 along the straining element 30.

Clause 13. The fuel strainer of clause 11 or 12, further comprising:
sensors 70 configured to detect a pressure of the fuel at the inlet 22 and the outlet 23;
a computing device 80 that receives signals from the sensors 70 and that controls the motor 52; and
wherein the computing device 80 comprises processing circuitry 81 configured to activate the motor 52 to move the scraper element 40 along the straining element 30 with a difference in the pressure at the inlet 22 and the outlet 23 exceeds a predetermined threshold.

Clause 14. The fuel strainer of any of clauses 11 to 13, wherein the scraper element 40 comprises a plurality of members that are positioned together in a stacked arrangement.

Clause 15. The fuel strainer of any of clauses 11 to 14, wherein the fuel strainer is mounted within an aircraft 100 and configured to filter the fuel that is delivered to an engine 104 that propels the aircraft during flight.

Clause 16. A method of removing debris from a straining element 30 that is configured to be positioned in a fuel system, the method comprising:
moving the fuel through the straining element 30 and removing debris from the fuel; and
periodically moving a scraper element 40 along the straining element 30 and removing the debris from the straining element 30.

Clause 17. The method of clause 16, further comprising:
detecting a difference in a pressure of the fuel between an inlet 22 and an outlet 23; and
moving the scraper element 40 along the straining element 30 and removing the debris from the straining element 30 when the difference exceeds a threshold.

Clause 18. The method of clause 16 or 17, further comprising maintaining a housing 21 that extends around the straining element 30 connected to a fuel line while removing the debris from the straining element 30.

Clause 19. The method of any of clauses 16 to 18, further comprising:
collecting the debris within an interior space 24 of a housing 21 that extends around the straining element 30;
removing a cap 26 that extends across an opening in the housing 21; and
removing the debris from the interior space 24 through the opening.

Clause 20. The method of any of clauses 16 to 19, wherein the straining element 30 is mounted in a fuel system 99 of an aircraft 100 and the method further comprising moving the scraper element 40 along the straining element 30 and removing the debris from the straining element 30 during flight of the aircraft 100.

Clause 21. A fuel strainer operable to remove debris from fuel within a fuel system, the fuel strainer comprising:
a housing 21 that extends around an interior space 24, the housing 21 comprising an inlet 22 to receive the fuel into the interior space 24 and an outlet 23 through which the fuel exits from the interior space 24;
a straining element 30 positioned within the interior space 24 and through which the fuel passes when moving between the inlet 22 and the outlet 23, the straining element 30 comprising a body 33 configured to allow the fuel to pass and to remove the debris from the fuel; and
a scraper element 40 positioned within the interior space 24 and configured to move relative to the straining element 30 and to contact against and remove the debris that has accumulated on the body 33.

Clause 22. The fuel strainer of clause 21, wherein the housing 21 and the straining element 30 comprise a common or substantially common shape.

Clause 23. The fuel strainer of clause 21 or 22, wherein the straining element 30 comprises a frame that is mounted to and supports the body 33 and the body 33 comprises openings 34 through which the fuel passes.

Clause 24. The fuel strainer of any of clauses 21 to 23, further comprising a first sensor 70 positioned at the inlet 22 and configured to detect a pressure of the fuel at the inlet 22, and a second sensor 70 positioned at the outlet 23 and configured to detect the pressure of the fuel at the outlet 23.

Clause 25. The fuel strainer of any of clause 21 to 24, further comprising:
a shaft 51 that extends within the interior space 24 in proximity to the straining element 30 and with the shaft 51 operatively connected to the scraper element 40; and
a motor 52 connected to the shaft 51;
wherein the motor 52 is configured to rotate the shaft 51 to move the scraper element 40 along the straining element 30.

Clause 26. The fuel strainer of any of clause 21 to 25, wherein the scraper element 40 comprises a plurality of layers that are in a stacked arrangement and wherein a limited number of the layers are configured to contact against the straining element 30 and a remainder of the layers are positioned away from the straining element 30.

Clause 27. The fuel strainer of any of clause 21 to 26, further comprising a computing device 80 comprising processing circuitry 81, the computing device 80 configured (i) to detect a pressure difference between an inlet pressure of the fuel at the inlet 22 and an outlet pressure of the fuel at the outlet 23, and (ii) to move the scraper element 40 relative to the straining element 30 to remove the debris from the straining element 30 when the pressure difference is above a predetermined amount.

Clause 28. The fuel strainer of any of clause 21 to 27, further comprising:
a reservoir 25 positioned within the interior space 24 adjacent to the straining element 30, the reservoir 25 configured to receive the debris that has been removed from the straining element 30; and
a cap 26 connected to the housing 21 and positioned at the reservoir 25;
wherein the cap 26 is configured to be removed from the housing 21 to enable the debris to be removed from the reservoir 25.

Clause 29. A method of removing debris from the fuel strainer of any of clauses 21 to 28, the method comprising:
moving the fuel through the straining element 30 and removing debris from the fuel; and
periodically moving the scraper element 40 along the straining element 30 and removing the debris from the straining element 30.

Clause 30. The method of clause 29, further comprising:
detecting a pressure difference in the fuel between the inlet 22 and the outlet 23; and
moving the scraper element 40 along the straining element 30 and removing the debris from the straining element 30 when the pressure difference exceeds a threshold.

Clause 31. The method of clause 29 or 30, further comprising maintaining the housing 21 that extends around the straining element 30 connected to the fuel line while removing the debris from the straining element 30.

Clause 32. The method of any of clauses 29 to 31, further comprising:
collecting the debris within the interior space 24 of the housing 21 that extends around the straining element 30;
removing a cap 26 that extends across an opening in the housing 21; and
removing the debris from the interior space 24 through the opening.

Clause 33. The method of any of clauses 29 to 32, wherein the straining element 30 is mounted in a fuel system 99 of an aircraft 100 and the method further comprising moving the scraper element 40 along the straining element 30 and removing the debris from the straining element 30 during flight of the aircraft 100.

By the term "substantially" with reference to amounts or measurement values, it is meant that the recited characteristic, parameter, or value need not be achieved exactly. Rather, deviations or variations, including, for example, tolerances, measurement error, measurement accuracy limitations, and other factors known to those skilled in the art, may occur in amounts that do not preclude the effect that the characteristic was intended to provide.

Spatially relative terms such as "under", "below", "lower", "over", "upper", and the like, are used for ease of description to explain the positioning of one element relative to a second element. These terms are intended to encompass different orientations of the device in addition to different orientations than those depicted in the figures. Further, terms such as "first", "second", and the like, are also used to describe various elements, regions, sections, etc. and are also not intended to be limiting. Like terms refer to like elements throughout the description.

The present examples are to be considered in all respects as illustrative and not restrictive, and all changes coming within the meaning of the appended claims are intended to be embraced therein.

## Claims

1. A fuel strainer operable to remove debris from fuel within a fuel system, the fuel strainer comprising:
a housing 21 that extends around an interior space 24, the housing 21 comprising an inlet 22 to receive the fuel into the interior space 24 and an outlet 23 through which the fuel exits from the interior space 24;
a straining element 30 positioned within the interior space 24 and through which the fuel passes when moving between the inlet 22 and the outlet 23, the straining element 30 comprising a body 33 configured to allow the fuel to pass and to remove the debris from the fuel; and
a scraper element 40 positioned within the interior space 24 and configured to move relative to the straining element 30 and to contact against and remove the debris that has accumulated on the body 33.

2. The fuel strainer of claim 1, wherein the housing 21 and the straining element 30 comprise a common or substantially common shape.

3. The fuel strainer of claim 1 or 2, wherein the straining element 30 comprises a frame that is mounted to and supports the body 33 and the body 33 comprises openings 34 through which the fuel passes.

4. The fuel strainer of any preceding claim, further comprising a first sensor 70 positioned at the inlet 22 and configured to detect a pressure of the fuel at the inlet 22, and a second sensor 70 positioned at the outlet 23 and configured to detect the pressure of the fuel at the outlet 23.

5. The fuel strainer of any preceding claim, further comprising:
a shaft 51 that extends within the interior space 24 in proximity to the straining element 30 and with the shaft 51 operatively connected to the scraper element 40; and
a motor 52 connected to the shaft 51;
wherein the motor 52 is configured to rotate the shaft 51 to move the scraper element 40 along the straining element 30.

6. The fuel strainer of any preceding claim, wherein the scraper element 40 comprises a plurality of layers that are in a stacked arrangement and wherein a limited number of the layers are configured to contact against the straining element 30 and a remainder of the layers are positioned away from the straining element 30.

7. The fuel strainer of any preceding claim, further comprising a computing device 80 comprising processing circuitry 81, the computing device 80 configured (i) to detect a pressure difference between an inlet pressure of the fuel at the inlet 22 and an outlet pressure of the fuel at the outlet 23, and (ii) to move the scraper element 40 relative to the straining element 30 to remove the debris from the straining element 30 when the pressure difference is above a predetermined amount.

8. The fuel strainer of any preceding claim, further comprising:
a reservoir 25 positioned within the interior space 24 adjacent to the straining element 30, the reservoir 25 configured to receive the debris that has been removed from the straining element 30; and
a cap 26 connected to the housing 21 and positioned at the reservoir 25;
wherein the cap 26 is configured to be removed from the housing 21 to enable the debris to be removed from the reservoir 25.

9. An aircraft 100 comprising the fuel strainer of any preceding claim mounted within the aircraft 100, optionally within a wing 103 of the aircraft 100.

10. The aircraft 100 of claim 9, wherein the fuel strainer is configured to filter the fuel that is delivered to an engine 104 that propels the aircraft during flight.

11. A method of removing debris from a straining element 30 that is configured to be positioned in a fuel system, the method comprising:
moving the fuel through the straining element 30 and removing debris from the fuel; and
periodically moving a scraper element 40 along the straining element 30 and removing the debris from the straining element 30.

12. The method of claim 11**,** further comprising:
detecting a pressure difference in the fuel between an inlet 22 and an outlet 23; and
moving the scraper element 40 along the straining element 30 and removing the debris from the straining element 30 when the pressure difference exceeds a threshold.

13. The method of claim 11 or 12, further comprising maintaining a housing 21 that extends around the straining element 30 connected to a fuel line while removing the debris from the straining element 30.

14. The method of any of claims 11 to 13, further comprising:
collecting the debris within an interior space 24 of a housing 21 that extends around the straining element 30;
removing a cap 26 that extends across an opening in the housing 21; and
removing the debris from the interior space 24 through the opening.

15. The method of any of claims 11 to 14, wherein the straining element 30 is mounted in a fuel system 99 of an aircraft 100 and the method further comprising moving the scraper element 40 along the straining element 30 and removing the debris from the straining element 30 during flight of the aircraft 100.
